# EUROPÄISCHE PATENTSCHRIFT

(11) **EP 0 962 257 B1**
(45) Veröffentlichungstag und Bekanntmachung des Hinweises auf die Patenterteilung: **26.05.2004**
(21) Anmeldenummer: 99105748.0
(22) Anmeldetag: 22.03.1999
(51) Int. Cl.: B05B 7/14

(54) **Pulverförder-Injektor**
Injector for transporting powder
Injecteur pour le transport de poudre

(30) Priorität: 03.06.1998 DE 19824802
(43) Veröffentlichungstag der Anmeldung: 08.12.1999
(73) Patentinhaber: ITW Gema AG, 9015 St. Gallen (CH)
(72) Erfinder: Michael, Hans Peter, 9015 Sankt Gallen (CH); Haas, Gerald, 9015 Sankt Gallen (CH)
(74) Vertreter: Vetter, Ewald Otto, Dipl.-Ing.

(56) Entgegenhaltungen:
- DE-A- 4 201 665
- US-A- 4 114 810
- US-A- 4 941 778

## Beschreibung

Die Erfindung betrifft einen Pulverförder-Injektor zur Förderung von Beschichtungspulver gemäß dem Oberbegriff von Anspruch 1.

US-A-4 941 778 zeigt einen Injektor aus Glas, damit er Lichtdurchlässig ist zur Dichtemessung des Pulverstromes darin mittels eines Strahlensenders und eines Strahlenempfängers.

Injektoren dieser Art haben eine Förderstrahldüse, einen ihr mit Abstand axial gegenüber liegenden Strahlfangkanal und eine an oder zwischen der Pulverstrahldüse und dem Strahlfangkanal angeordnete Pulveransaugöffnung. Ferner können eine oder mehrere Zusatzluft-Öffnungen an oder zwischen der Förderstrahldüse und dem Strahlfangkanal oder stromabwärts vom Strahlfangkanal vorgesehen sein. Injektoren dieser Art sind in verschiedenen Ausführungsformen aus den deutschen Patentschriften 1 266 685, 1 922 889 und 42 01 665 C 2 bekannt. Der Strahlfangkanal wird häufig auch als Fangdüse bezeichnet.

Die bekannten Injektoren haben den Nachteil, daß der Luftstrom und die Pulverpartikel den Strahlfangkanal abnützen. Dies hat nicht nur den Nachteil, daß der Strahlfangkanal häufig ausgetauscht werden muß, sondern auch den Nachteil, daß sich in Abhängigkeit vom Abnutzungsgrad auch der Pulvervolumenstrom (pro Zeiteinheit geförderte Pulvermenge) ändert, was ungleiche Beschichtungsstärken und Beschichtungsqualitäten auf einem zu beschichtenden Gegenstand zur Folge hat. Die bekannten Strahlfangkanäle bestehen aus Kunststoff oder Metall. Metall hat den Nachteil, daß die Pulverpartikel dazu tendieren, an der Kanalwand zu haften und anzusintern. Damit wird der Querschnitt des Strahlfangkanals und damit auch der Pulvervolumenstrom verändert. Bessere Gleiteigenschaften als Metall haben Kunststoffe, wobei es üblich ist, solche Kunststoffe auszuwählen, an welchen die Pulverpartikel möglichst wenig Haftreibung haben. Aber auch hier kann ein Ansammeln und Ansintern von Pulverpartikeln nicht immer zuverlässig vermieden werden. Außerdem sind Kunststoffe "weicher" als Metall und deshalb einem starken Verschleiß ausgesetzt.

Durch die Erfindung soll die Aufgabe gelöst werden, eine Möglichkeit zu schaffen, durch welche der Strahlfangkanal weniger schnell abgenutzt wird und Ansammlungen und Ansinterungen von Pulverpartikeln reduziert oder vollständig vermieden werden.

Diese Aufgabe wird gemäß der Erfindung dadurch gelöst, daß der Strahlfangkanal mindestens in den Bereichen, in welchen ein Förderluft-Pulver-Strahl auf ihn auftrifft, aus Glas mit glatter Kanaloberfläche besteht.

Durch die Erfindung werden die Vorteile erzielt, daß praktisch keine Ansinterungen und praktisch kein Verschleiß im Strahlfangkanal stattfindet. Damit wird auch auf lange Betriebszeiten hinaus eine gleichmäßige Pulverförderung gewährleistet.

Weitere Merkmale der Erfindung sind in den Unteransprüchen enthalten.

Pulverförder-Injektoren nach der Erfindung können in jeder beliebigen Weise ausgeführt werden, wie dies insbesondere auch aus dem Stand der Technik bekannt ist. Beispielsweise können ein oder mehrere Zusatzlufteinlässe in den Unterdruckbereich des Injektors und/oder stromabwärts davon in den Pulverkanal vorgesehen sein, durch welchen das Luft-Pulver-Gemisch strömt.

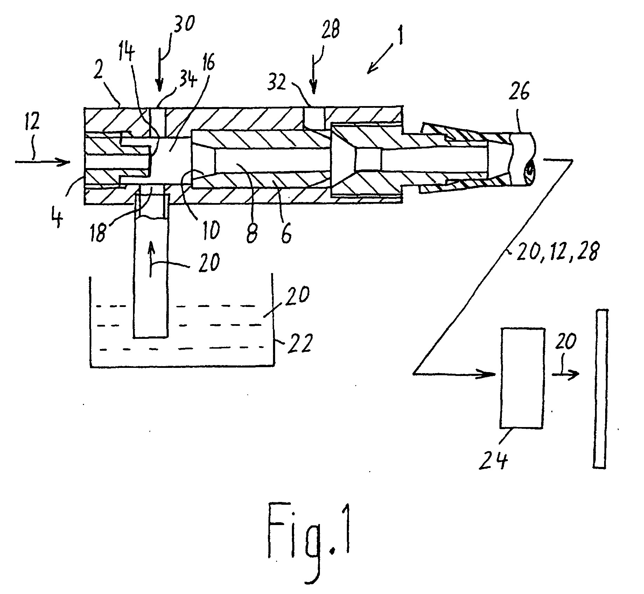

Die Erfindung wird im folgenden mit Bezug auf die einzige Zeichnung beschrieben. Die Zeichnung zeigt in
- Fig. 1: einen Axialschnitt eines Pulverförder-Injektors nach der Erfindung zur Förderung von Beschichtungspulver.

Der Injektor von Fig. 1 enthält in einem Gehäuse 2 eine Förderstrahldüse 4 und mit axialem Abstand axial dazu angeordnet eine Fangdüse 6 mit einem Strahlfangkanal 8, welcher an seinem stromaufwärtigen Anfangsabschnitt 10 in Strömungsrichtung trichterartig enger werdend ausgebildet ist. Ein Förderluftstrom 12 erzeugt nach der Düsenöffnung 14 der Förderstrahldüse 4 in einem Unterdruckbereich 16 des Gehäuses 2 einen Unterdruck, durch welchen über eine Pulveransaugöffnung 18 Beschichtungspulver 20 aus einem Pulverbehälter 22 angesaugt wird. Das angesaugte Beschichtungspulver 20 wird von dem Förderluftstrom 12 in den Strahlfangkanal 8 gefördert und trifft dort teilweise auf die Kanalwand.

Der Strahlfangkanal 8 besteht mindestens in seinem Bereich, wo Pulverpartikel auf die Kanalwand auftreffen, aus Saphir-Glas mit einer sehr glatten Kanaloberfläche. Vorzugsweise besteht die gesamte Fangdüse 6 aus diesem Saphirglas. Das Glas sollte möglichst hart sein. Die Kanaloberfläche sollte so glatt wie möglich sein. Besonders glatte Oberflächen können bei der Glasherstellung im Glasblasverfahren erzielt werden.

Das pneumatisch geförderte Pulver 20 kann von dem Injektor 1 zu einem weiteren Behälter oder zu einer Sprühvorrichtung 24 gefördert werden, beispielsweise einer manuellen oder automatischen Sprühpistole, mit welcher das Pulver auf zu beschichtende Gegenstände gesprüht wird.

Die Stärke des Pulvervolumenstromes (geförderte Pulvermenge pro Zeiteinheit) ist hauptsächlich von der Stärke des Unterdruckes oder Vakuums in dem Unterdruckbereich 16 abhängig und damit primär von der Stärke des Förderluftstromes 12. Für kleine Pulvermengen pro Zeiteinheit kann der Förderluftstrom 12 so schwach werden, daß sich in der Pulverleitung 26, welche den Injektor 1 mit dem Pulverempfänger 24 verbindet, Pulverablagerungen entstehen. Deshalb ist es üblich, dem Pulver-Förderluft-Strom nach dem Unterdruckbereich 16 Zusatzluft 28 zuzuführen, um die für eine ablagerungsfreie Pulverförderung in der Pulverleitung 26 erforderliche Gesamtluftmenge einzustellen.

Ein oder mehrere Zusatzluft-Einlässe 32 für die Zusatzluft 28 können entsprechend der Zeichnung stromabwärts der Fangdüse 6, oder in der Fangdüse, oder stromaufwärts der Fangdüse 6 vorgesehen sein. Die Möglichkeit, Zusatzluft 30 stromaufwärts der Fangdüse 6 in den Unterdruckbereich 16 einzuleiten, ist durch einen Pfeil und einen weiteren Einlaß 34 dargestellt.

Die Fangdüse 6 ist vorzugsweise austauschbar in dem Gehäuse 2 angeordnet, beispielsweise eingesteckt oder eingeschraubt.

## Patentansprüche

1. Pulverförder-Injektor zur Förderung von Beschichtungspulver, mit einer Förderstrahldüse (4), einem ihr mit Abstand axial gegenüber liegenden Strahlfangkanal (8) aus Glas und mit einer Pulveransaugöffnung (18) an oder zwischen der Förderstrahldüse (4) und dem Strahlfangkanal (8),
**dadurch gekennzeichnet,**
**daß** der Strahlfangkanal (8) aus Saphir-Glas mit glatter Kanaloberfläche besteht, mindestens in dem Bereich (10), wo ein Förderluft-Pulver-Strahl auf ihn auftrifft.

2. Pulverförder-Injektor nach Anspruch 1,
**dadurch gekennzeichnet,**
**daß** ein den Strahlfangkanal (8) bildender Körper (6) austauschbar in einen Grundkörper (2) eingesetzt ist.

3. Pulverförder-Injektor nach einem der Ansprüche 1 bis 2,
**dadurch gekennzeichnet,**
**daß** der Strahlfangkanal (8) einen in Strömungsrichtung trichterartig enger werdenden Querschnitt hat, mindestens an seinem stromaufwärtigen Anfangsabschnitt (10).

4. Pulverförder-Injektor nach einem der vorhergehenden Ansprüche,
**dadurch gekennzeichnet,**
**daß** mindestens ein Zusatzlufteinlaß (32, 34) stromabwärts der Förderstrahldüse (4) vorgesehen ist.

5. Pulverförder-Injektor nach Anspruch 4,
**dadurch gekennzeichnet,**
**daß** der mindestens eine Zusatzlufteinlaß (32) stromabwärts des Abschnittes des Strahlfangkanals (8) gebildet ist, welcher aus Glas besteht.

## Claims

1. Powder-delivery injector for delivering coating powder, having a delivery-jet nozzle (4), having a jet-receiving duct (8) consisting of glass which is located opposite said nozzle, at a distance apart therefrom in the axial direction, and having a powder-suction opening (18) at or between the delivery-jet nozzle (4) and the jet-receiving duct (8), **characterized in that** the jet-receiving duct (8) consists of sapphire glass and has a smooth duct surface at least in the region (10) where a delivery air/powder jet comes into contact with it.

2. Powder-delivery injector according to Claim 1, **characterized in that** a body (6) which forms the jet-receiving duct (8) is introduced into a basic body (2) such that it can be exchanged.

3. Powder-delivery injector according to Claim 1 or 2, **characterized in that** the jet-receiving duct (8) has a cross-section which narrows in a funnel-like manner in the direction of flow, at least.at its initial, upstream section (10).

4. Powder-delivery injector according to one of the preceding claims, **characterized in that** at least one additional-air inlet (32, 34) is provided downstream of the delivery-jet nozzle (4).

5. Powder-delivery injector according to Claim 4, **characterized in that** the at least one additional-air inlet (32) is formed downstream of that section of the jet-receiving duct (8) which consists of glass.

## Revendications

1. Injecteur pour le transport de poudre destiné à transporter de la poudre de revêtement, comprenant une buse à et de distribution (4), un conduit de collecte de jet (8) en verre se trouvant axialement en regard de celle-ci à une certaine distance, et une ouverture d'aspiration de poudre (18) sur ou entre la buse à jet de distribution (4) et le conduit de collecte de jet (8),
**caractérisé en ce que**
le conduit de collecte de jet (8) se compose de verre-saphir avec une surface de conduit lisse, au moins dans la région (10) dans laquelle un jet de poudre et d'air de distribution vient le frapper.

2. Injecteur pour le transport de poudre selon la revendication 1,
**caractérisé en ce qu'**
un corps (6) formant le canal de collecte de jet (8) est inséré de manière remplaçable dans un corps de base (2).

3. Injecteur pour le transport de poudre selon l'une quelconque des revendications 1 à 2,
**caractérisé en ce que**
le conduit de collecte de jet (8) a une section transversale se rétrécissant en forme d'entonnoir dans la direction de l'écoulement, au moins sur sa portion de début en amont de l'écoulement (10).

4. Injecteur pour le transport de poudre selon l'une quelconque des revendications précédentes,
**caractérisé en ce qu'**
au moins une entrée d'air supplémentaire (32, 34) est prévue en aval de la buse à jet de distribution (4).

5. Injecteur pour le transport de poudre selon la revendication 4,
**caractérisé en ce que**
l'au moins une entrée d'air supplémentaire (32) est formée en aval de la portion du conduit de collecte de.jet (8) qui se compose de verre.
